# EUROPEAN PATENT SPECIFICATION

(11) **EP 2 223 368 B1**
(45) Date of publication and mention of the grant of the patent: **21.09.2011**
(21) Application number: 08783727.4
(22) Date of filing: 24.07.2008
(51) Int. Cl.: H01M 4/04, H01M 4/48, H01M 10/0525, H01M 10/0569, H01M 4/13

(54) **NEGATIVE ELECTRODE FOR BATTERY AND LITHIUM BATTERY USING THE SAME**
NEGATIVE ELEKTRODE FÜR EINE BATTERIE UND LITHIUMSEKUNDÄRBATTERIE DAMIT
ELECTRODE NÉGATIVE POUR PILE ET PILE AU LITHIUM L'UTILISANT

(30) Priority: 22.02.2008 CN 200810008301
(43) Date of publication of application: 01.09.2010
(73) Proprietor: Byd Company Limited, Guangdong 518118 (CN)
(72) Inventor: SHEN, Xi, Shenzhen Guangdong 518118 (CN); XIA, Yu, Shenzhen Guangdong 518118 (CN); PAN, Fuzhong, Shenzhen Guangdong 518118 (CN)
(74) Representative: HOFFMANN EITLE
(86) International application number: PCT/CN2008/071734
(87) International publication number: WO 2009/103202

(56) References cited:
- CA-A1- 2 535 064
- CN-A- 1 198 022
- CN-A- 1 937 283
- JP-A- 2005 135 723
- JP-A- 2006 278 234
- US-A1- 2005 221 187
- US-A1- 2007 243 467

## Description

### FIELD OF THE INVENTION

The present invention relates to a negative electrode for battery and a lithium ion battery comprising the same.

### BACKGROUND OF THE INVENTION

Presently, most commercial lithium ion batteries adopt carbonaceous material as negative electrode material. The carbonaceous material has abundant resource and high lithium ion storage capacity; lithium ions can rapidly carry out intercalation and deintercalation reactions in carbonaceous material; therefore carbonaceous material plays an important role in lithium ion batteries. But when carbonaceous material is adopted as negative electrode material for lithium ion batteries, owing to intrinsic properties of carbonaceous material (such as low diffusion rate of lithium ions in carbonaceous material), the prepared lithium ion secondary batteries have some unconquerable shortcomings, such as poor high-rate discharge-charge performance. During high-rate discharging-charging, the lithium ion secondary batteries show severe polarization, i.e. metal lithium is separated out on carbon electrode surface to form lithium dendrites and thus cause safety issue.

For improving high-rate discharge-charge performance of lithium ion secondary batteries, many researchers have done large amounts of study. They have found that when lithium titanium oxide compound is adopted as negative electrode material, lithium ions have high diffusion rate in the material, electric potential relative to metal lithium of 1.55V, and no formation of SEI (solid electrolyte interface) film; therefore lithium titanium oxide compound has considerable application potential in negative electrode material. But due to poor electronic conduction performance, the battery using that material as negative electrode material has poor high-rate discharge-charge performance. Therefore, researchers have tried to add some conductive agent to improve high-rate discharge-charge performance of the battery, for example, CN 1841820A discloses a non-aqueous electrolyte secondary battery, in which spinel lithium titanate is adopted as main material for negative electrode active material, and carbonaceous material with d002 value of 0.335-0.34nm and volume density less than 0.1g/cm³ is added into the negative electrode active material. The method for preparing the negative electrode of the non-aqueous electrolyte secondary battery comprises mixing spinel lithium titanate as negative electrode active material, carbonaceous material as conductive agent, and binder to form negative electrode material, loading on a negative electrode current collector, and pressing to give a negative electrode; wherein the carbonaceous material has content of 5-20wt% by total weight of the negative electrode material.

A non-aqueous electrolyte secondary battery is also disclosed in CN 1728442A, which comprises a case, non-aqueous electrolyte comprising linear sulfite ester in the case, an negative electrode capable of absorbing/releasing lithium element or ion in the case, and a negative electrode comprising lithium titanium oxide compound and carbonaceous material in the case. The negative electrode preparation method comprises preparing slurry with 70-96wt% of lithium titanium oxide compound as negative electrode active material, 2-28wt% of carbonaceous material as conductive agent, and 2-28wt% of binder; coating the slurry on a negative electrode current collector, drying, pressing, and cutting to give a negative electrode.

The aforementioned non-aqueous electrolyte secondary battery adopts lithium titanium oxide compound as negative electrode active material and adds carbonaceous material as conductive agent to improves conductive performance of the negative electrode, thus effectively improves high-rate discharge-charge performance of the battery; but due to low specific capacity (theoretic capacity of 175mAh/g) of lithium titanium oxide compound, the lithium ion battery using the lithium titanium oxide compound mixed with conductive agent amount of carbonaceous material as negative electrode active material has low capacity.

Document CA 2 535 064 discloses a multilayer negative electrode for a battery with the inner most layer containing only carbonaceous materials.

### SUMMARY OF THE INVENTION

The object of the present invention is to overcome the disadvantages of low capacity and low voltage in available lithium ion batteries with high-rate discharge-charge performance and safety performance, and provide a negative electrode for lithium ion battery with high capacity, high voltage, and desirable high-rate discharge-charge performance and safety performance, and a lithium ion battery comprising the same.

The present invention provides a negative electrode for battery comprising a current collector and a negative electrode material coat on the current collector, the said negative electrode material comprises carbonaceous material, binder, and lithium titanium oxide compound, wherein in the negative electrode material coat, the carbonaceous material has total weight percentage content higher than that of the lithium titanium oxide compound; and the negative electrode material coat, comprises at least two layers; in the outermost layer of the negative electrode material coat, the carbonaceous material has weight percentage content lower than that of the lithium titanium oxide compound; in other layers of the negative electrode material coat, the carbonaceous material has weight percentage content higher than that of the lithium titanium oxide compound.

The present invention also provides a lithium ion battery comprising a case, a positive electrode, a negative electrode, a separator, and electrolyte, and the positive electrode, negative electrode, separator, and electrolyte are sealed in the battery case, wherein the negative electrode is the negative electrode provided by the present invention.

For improving electric capacity and voltage of lithium ion battery with desirable high-rate discharge-charge performance and safety performance, the inventor of the present invention has found that by increasing carbonaceous material content in the negative electrode material, the prepared battery has both increased capacity and voltage, but the battery has significantly lowered cycle performance, high-rate discharge-charge performance and safety performance (refer to the following comparison example 1).

The inventor of the present invention has accidentally found that lithium ion battery has improved performance when in negative electrode material coat, total weight percentage content of carbonaceous material is higher than that of lithium titanium oxide compound; and the negative electrode material is coated by layer, the carbonaceous material has weight percentage content lower than that of lithium titanium oxide compound in the outermost layer of the negative electrode material coat, and the carbonaceous material has weight percentage content higher than that of lithium titanium oxide compound in other layers of the negative electrode material coat.

The experiment result shows that the lithium ion battery prepared by using the negative electrode in the present invention has capacity higher than 970mAh and voltage higher than 3.6V; while the available lithium ion batteries (comparison example 2) with high-rate discharge-charge performance and safety performance has capacity of 648mAh and voltage less than 3.2V. Additionally, the lithium ion battery using the negative electrode provided by the present invention has cycle performance, high-rate discharge-charge performance, and safety performance all equivalent to those of available lithium ion batteries with high-rate discharge-charge performance and safety performance. The button battery using the negative electrode provided by the present invention has capacity higher than 1.8mAh, while the button battery using the available negative electrode has capacity of 1.08mAh. Thus, the lithium ion battery using the negative electrode provided by the present invention has high capacity and voltage, excellent cycle performance, and desirable high-rate discharge-charge performance and safety performance.

### DETAILED DESCRIPTION OF THE PREFERRED EMBODIMENTS

The present invention provides a negative electrode for battery comprising a current collector, and a negative electrode material coat on the current collector, in which the said negative electrode material comprises carbonaceous material, binder, and lithium titanium oxide compound, wherein the negative electrode material coat, the carbonaceous material has total weight percentage content higher than that of the lithium titanium oxide compound; and the negative electrode material coat comprises at least two layers; in the outermost layer of the negative electrode material coat, the carbonaceous material has weight percentage content lower than that of the lithium titanium oxide compound; in other layers of the negative electrode material coat, the carbonaceous material has weight percentage content higher than that of the lithium titanium oxide compound.

In one embodiment of the present invention, the ratio of the total weight percentage content of the carbonaceous material to that of lithium titanium oxide compound is higher than 1, preferably (1.5-100):1; in the outermost layer of the negative electrode material coat, the ratio of weight percentage content of the carbonaceous material to that of lithium titanium oxide compound can be (0-0.25):1; in other layers of the negative electrode material coat, the ratio of weight percentage content of lithium titanium oxide compound to that of the carbonaceous material can be (0-0.25): 1.

In one embodiment of the present invention, the negative electrode material coat comprises a layer directly contacting with current collector surface and an outer layer; wherein the layer directly contacting with current collector surface may comprise 80-95wt% of carbonaceous material, 1-10 wt% of binder, 0-8 wt % of conductive agent, and 0-16wt% of lithium titanium oxide compound, based on total weight of the layer directly contacting with current collector surface; the outer layer may comprise 80-95wt% of lithium titanium oxide compound, 0-16wt% of carbonaceous material, 0-8wt% of conductive agent, and 1-10wt% of binder, based on total weight of the outer layer.

As the conductive agent can increase conductivity of electrodes, lower battery internal resistance, and increase battery high-rate discharge-charge performance, the negative electrode material coat in the present invention preferably comprises conductive agent. The conductive agent may be nickel powder and/or copper powder.

In one embodiment of the present invention, the ratio of thickness of the layer directly contacting with the current collector surface to that of outer layer of the negative electrode material coat is higher than 1, and preferably 50:(25-2) to obtain higher electric capacity and better performance. The thickness of the layer directly contacting with the current collector surface can be 0.070-0.120mm; and the thickness of the outer layer can be 0.003-0.040mm.

In the present invention, the carbonaceous material can be various common carbonaceous materials, such as one or more selected from the group consisted of graphite, carbon black, pyrolyzed carbon, coke, activated carbon, carbon fiber, petroleum coke, hard carbon, and carbon nanotubes; carbon obtained by high temperature oxidation of polyyne polymer material; or organic polymer sintered product. The organic polymer sintered product can be product resulted by sintering and carbonizing bakelite resin, or epoxy resin, etc. The carbonaceous material in the present invention is preferably graphite.

The lithium titanium oxide compound can be any compound comprising lithium element, titanium element and oxygen element, such as lithium titanium oxide compound material with chemical formula of Li₃₊₃ₓTi₆-₃ₓ-yMyO₁₂, wherein x and y are molar fraction, 0≤x≤1/3, and 0≤y≤0.25; and M is one or more selected from the group consisted of Fe, Al, Ca, Co, B, Cr, Ni, Mg, Zr, Ga, V, Mn, and Zn.

In the present invention, the binder can be various binders used in the negative electrode of available lithium ion secondary batteries, such as one or more selected from the group consisted of polyvinylidene fluoride (PVDF), polytetrafluoroethylene (PTFE), sodium carboxymethylcellulose (CMC), and styrene- butadiene rubber (SBR). The binder is preferably a mixture of hydrophobic binder and hydrophilic binder. The ratio of the hydrophobic binder to hydrophilic binder has no special restriction, and can be determined as needed, for example, the weight ratio of the hydrophilic binder to the hydrophobic binder can be (0.3:1)-(1:1). The binder can be applied in form of aqueous solution, emulsion, or solid, preferably aqueous solution or emulsion. The concentrations of the hydrophilic binder solution and hydrophobic binder emulsion have no special limit, which can be flexibly adjusted according to viscosity of negative electrode slurry to be coated and operation requirement, for example, the hydrophilic binder solution may have concentration of 0.5-4wt%, and the hydrophobic binder emulsion may have concentration of 10-80wt%. The hydrophobic binder can be PTFE, SBR, or mixture thereof. The hydrophilic binder can be one or more selected from the group consisted of hydroxypropylmethylcellulose, sodium carboxymethylcellulose, hydroxyethylcellulose, and polyvinyl alcohol.

The current collector can be various current collectors for negative electrodes of available lithium ion secondary batteries, such as copper foil.

The negative electrode can be prepared by routine method. For example, a mixture prepared from solvent and negative electrode material with weight percentage content of carbonaceous material higher than that of lithium titanium oxide compound is firstly coated onto a wide conductive substrate, then dried and rolled to give a primary electrode plate with a first coat; then a mixture prepared from solvent and negative electrode material with weight percentage content of carbonaceous material lower than that of lithium titanium oxide compound is further coated onto the primary electrode plate, dried, and rolled to give a secondary electrode plate with a second coat; and the obtained secondary electrode plate is cut into appropriate size to give a negative electrode.

The solvent can be one or more selected from the group consisted of routine solvents known for those skilled in the art, such as N-methyl-2-pyrrolidinone, water, water soluble solvent, or mixture thereof; the water soluble solvent comprises C₁₋₆ lower alcohol, such as methanol, ethanol, propanol, butanol, pentanol and hexanol; or acetone, and N,N-dimethylformamide. The usage amount of the solvent should be sufficient to allow the slurry to be coated on the current collector.

The drying and rolling conditions can be conditions well known for those skilled in the art, for example, the drying temperature is usually 60-120°C, preferably 80-110°C, and drying time is 0.5-5 hr.

The present invention further provides a lithium ion battery comprising a case, a positive electrode, a negative electrode, a separator, and electrolyte, in which the positive electrode, negative electrode, separator, and electrolyte are sealed in the battery case, wherein the negative electrode is the negative electrode provided by the present invention.

The positive electrode can be common positive electrodes well known for those skilled in the art, i.e. comprising a positive electrode current collector and positive electrode material coat on the positive electrode current collector. The present invention has no special restriction on positive electrode material coat . The positive electrode material coat usually comprises positive electrode active substance, binder, and conductive agent. The positive electrode active substance may adopt commercial positive electrode active substances, such as LiFePO₄, Lᵢ₃V₂(PO₄)₃, LiMn₂O₄, LiMnO₂, LiNiO₂, LiCoO₂ LiVPO₄F or LiFeO₂; or ternary system Li₁₊ₐL_{1-b-c}M_{b}N_{c}O₂, in which -0.1≤a≤0.2, 0≤b≤1, 0≤c≤1, 0≤b+c≤1.0, and L, M, N are one or more selected from the group consisted of Co, Mn, Ni, Al, Mg, Ga, Sc, Ti, V, Cr, Fe, Cu and Zn.

The binder can be any binder well known for those skilled in the art, such as one or more selected from the group consisted of PVDF, PTFE and SBR. The binder content can be 0.1-15wt% of the total weight of positive electrode material, preferably 1-7wt%.

The conductive agent can be any conductive agent well known for those skilled in the art, such as one or more selected from the group consisted of graphite, carbon fiber, carbon black, metal powder, and fiber. The content of the conductive agent can be 0.1-20wt% of the positive electrode material total weight, preferably 2-10wt%.

The method for preparing the positive electrode can be various routine methods in the field, for example, positive electrode active substance, binder, and conductive agent are formulated into positive electrode material slurry with solvent, and the obtained slurry is coated onto a positive electrode current collector, dried, pressed, and cut to give the positive electrode. The drying temperature can be 100-150°C, and the drying time can be 2-10 hr.

The solvent used in the positive electrode material slurry can be various solvents used in prior art, such as one or more selected from the group consisted of N-methyl-2-pyrrolidinone (NMP), dimethylformamide (DMF), diethylformamide (DEF), dimethylsulfoxide (DMSO), tetrahydrofuran (THF), water, and alcohols. The solvent addition amount is well known for those skilled in the art, which can be flexibly adjusted according to viscosity of the positive electrode material slurry to be coated and operation requirements, and should allow the slurry to be coated onto the conductive substrate. Generally, the usage amount of the solvent should allow content of the positive electrode active substance in the slurry to be 40-90wt%, preferably 50-85wt%.

In the lithium ion battery, separator is disposed between positive electrode and negative electrode and has electric insulation property and liquid holding property. In the present invention, the separator can be selected from various separator adopted by lithium ion secondary batteries well known for those skilled in the art, such as polyolefin microporous membrane, polyethylene felt, glass fiber felt or superfine glass fiber paper.

In the lithium ion battery provided by the present invention, the electrolyte can be non-aqueous electrolyte. The non-aqueous electrolyte is solution formed by lithium salt electrolyte in non-aqueous solvent. In the present invention, various non-aqueous electrolytes well known for those skilled in the art can be adopted. For example, the lithium salt electrolyte can be selected from one or more selected from the group consisted of lithium hexafluorophosphate (LiPF₆), lithium perchlorate (LiClO₄), lithium tetrafluoroborate (LiBF₄), lithium hexafluoroarsenate(LiAsF₆), lithium hexafluorosilicate (LiSiF₆), lithium tetraphenylborate (LiB(C₆H₅)₄), lithium chloride (LiCI), lithium bromide (LiBr), lithium chloroaluminate (LiAlCl₄), and lithium fluorohydrocarbonylsulfonate (LiC(SO₂CF₃)₃, LiCH₃SO₃, LiN(SO₂CF₃)₂); the non-aqueous solvent can be selected from chain acid ester and cyclic acid ester mixed solution, wherein the chain acid ester can be one or more selected from the group consisted of dimethyl carbonate (DMC), diethyl carbonate (DEC), ethyl methyl carbonate (EMC), methyl propyl carbonate (MPC), dipropyl carbonate (DPC), and other chain organic esters comprising fluorine, sulfur, or unsaturated bond; the cyclic acid ester can be one or more selected from the group consisted of ethylene carbonate (EC), propylene carbonate (PC), vinylene carbonate (VC), γ-butyrolactone (γ-BL), sultone, and other cyclic organic esters comprising fluorine, sulfur, or unsaturated bond. In the non-aqueous electrolyte, the concentration of the lithium salt electrolyte can be 0.1-2 mol/L, preferably 0.8-1.2 mol/L.

In the present invention, the method for preparing the inventive lithium ion battery can be methods known for those skilled in the art. Generally, the method comprises sequentially winding or stacking a positive electrode, a separator, and a negative electrode to form an electrode core, disposing the electrode core into a battery case, charging electrolyte, and sealing to give a lithium ion battery, in which the winding or stacking and sealing methods can be methods well known for those skilled in the art. The usage amount of the electrolyte can be routine amount well known for those skilled in the art.

In the following examples, the battery negative electrode and the lithium ion battery provided by the present invention are described in detail by using fabrication of LP053450AR type battery as an example.

### Example 1

Preparation of positive electrode comprises: adding LiCoO₂, carbon black, and PVDF at weight ratio of 100:8:5 in N-methylpyrrolidone, stirring well, coating the mixture onto aluminum foil, drying at 90°C, rolling, and cutting to give a positive electrode with coat thickness of 0.133-0.137mm, size of 480cm × 42.5cm, and LiCoO₂ weight of 6.35g.

Preparation of negative electrode comprises: adding graphite, conductive carbon black and SBR at weight ratio of 100:4:8 into deionized water, and stirring well to give a first mixture; coating the first mixture onto copper foil, drying at 90°C, and rolling to give a primary electrode plate with a first coat in thickness of 0.105-0.109mm; adding Li₄Ti₅O₁₂, conductive carbon black, and SBR at weight ratio of 100:4:8 into deionized water, stirring well to give a second mixture, coating the second mixture onto the primary electrode plate, drying at 90°C, and rolling to give a secondary electrode plate with a second coat in thickness of 0.009-0.013mm; cutting the secondary electrode plate to give a negative electrode with size of 493mm × 44mm, Li₄Ti₅O₁₂ weight of 0.04g, and graphite weight of 2.90g.

The battery preparation comprises stacking and winding aforementioned positive electrode, 25 micron thick polypropylene (PP) separator, and aforementioned negative electrode into a square lithium ion electrode core, putting into a square battery case, injecting 1 mol/L LiPF₆/(EC+DEC+DMC) electrolyte (the weight ratio of EC:DEC:DMC = 1:1:1), sealing the case, and preparing into a square lithium ion battery with thickness of 5mm, width of 34mm, and height of 50mm.

### Example 2

A lithium ion battery is prepared according to the method in Example 1, but the preparation of negative electrode is different.

Preparation of negative electrode comprises: adding graphite and PVDF at weight ratio of 100:10 into deionized water, and stirring well to give a first mixture; coating the first mixture onto copper foil, drying at 90°C, and rolling to give a primary electrode plate with a-first coat in thickness of 0.075-0.079mm; adding Li_{3.95}Al_{0.15}Ti_{0.49}O₁₂, carbon nanotubes, and PVDF at weight ratio of 100:2:10 into deionized water, stirring well to give a second mixture, coating the second mixture onto the primary electrode plate, drying at 90°C, and rolling to give a secondary electrode plate with a second coat in thickness of 0.035-0.039mm; cutting the secondary electrode plate to give negative electrode with size of 493mm x 44mm, Li_{3.95} Al_{0.15}Ti₀.₄₉O₁₂ weight of 1.25g, and carbon black weight of 2.60g.

### Example 3

A lithiumion battery is prepared according to the method in Example 1, but the preparation of negative electrode is different.

Preparation of negative electrode comprises: adding coke, nickel powder and PTFE at weight ratio of 100:5:6 into deionized water, and stirring well to give a first mixture; coating the first mixture onto copper foil, drying at 90°C, and rolling to give a primary electrode plate with a first coat in thickness of 0.115-0.119mm; adding Li_{3.9}Mg_{0.1}Al_{0.15}Ti_{4.85}O₁₂, nickel powder, and PTFE at weight ratio of 100:12:8 into deionized water, stirring well to give a second mixture, coating the second mixture onto the primary electrode plate, drying at 90°C, and rolling to give a secondary electrode plate with a second coat in thickness of 0.004-0.008mm; cutting the secondary electrode plate to give negative electrode with size of 493mm x 44mm, L_{i3.9}Mg_{0.1}Al_{0.15}Ti_{4.85}O₁₂ weight of 0.03g, and coke weight of 2.92g.

### Example 4

A lithium ion battery is prepared according to the method in Example 1, but the preparation of negative electrode is different.

Preparation of negative electrode comprises: adding graphite, conductive carbon black, PTFE, and CMC at weight ratio of 100:8:2:1 into deionized water, and stirring well to give a first mixture; coating the first mixture onto copper foil, drying at 90°C, and rolling to give a primary electrode plate with a first coat in thickness of 0.108-0.112mm; adding Li_{3.95}Ga_{0.15}Ti_{0.49}O₁₂, copper powder, SBR, and CMC at weight ratio of 100:5:1:2 into deionized water, stirring well to give a second mixture, coating the second mixture onto the primary electrode plate, drying at 90°C, and rolling to give a secondary electrode plate with a second coat in thickness of 0.013-0.017mm; cutting the secondary electrode plate to give negative electrode with size of 493mm x 44mm, Li_{3.95}Ga_{0.15}Ti_{0.49}O₁₂ weight of 0.19g, and graphite weight of 2.86g.

### Example 5

A lithium ion battery is prepared according to the method in Example 1, but the preparation of negative electrode is different.

Preparation of negative electrode comprises: adding graphite, conductive carbon black, Li₄Ti₅O₁₂, and SBR at weight ratio of 100:2:10:6 into deionized water, and stirring well to give a first mixture; coating the first mixture onto copper foil, drying at 90°C, and rolling to give a primary electrode plate with a first coat in thickness of 0.097-0.101mm; adding Li₄Ti₅O₁₂, graphite, and SBR at weight ratio of 100:10:8 into deionized water, stirring well to give a second mixture, coating the second mixture onto the primary electrode plate, drying at 90°C, and rolling to give a secondary electrode plate with a second coat in thickness of 0.015-0.019mm; cutting the secondary electrode plate to give negative electrode with size of 493mm x 44mm, Li₄Ti₅O₁₂ weight of 0.34g, and graphite weight of 2.64g.

### Example 6

A lithium ion battery is prepared according to the method in Example 1, but the preparation of negative electrode is different.

Preparation of negative electrode comprises: adding graphite, conductive carbon black, Li₄Ti₅O₁₂, and SBR at weight ratio of 100:2:16:6 into deionized water, and stirring well to give a first mixture; coating the first mixture onto copper foil, drying at 90°C, and rolling to give a primary electrode plate with a first coat in thickness of 0.089-0.093mm; adding Li₄Ti₅O₁₂, graphite, and SBR at weight ratio of 100:20:8 into deionized water, stirring well to give a second mixture, coating the second mixture onto the primary electrode plate, drying at 90°C, and rolling to give a secondary electrode plate with a second coat in thickness of 0.024-0.028mm; cutting the secondary electrode plate to give negative electrode with size of 493mm x 44mm, Li₄Ti₅O₁₂ weight of 0.23g, and graphite weight of 2.40g.

### Comparison Example 1

This comparison Example is used to describe negative electrode with material composition identical to that of Example 1 while only having one coat, and secondary lithium ion battery including the same.

Lithium ion battery is prepared according to method in Example 1, the difference is in that the coat on the negative electrode is consisted of one layer; the coat is formed by graphite, conductive carbon black, Li₄Ti₅O₁₂, and SBR mixed at weight ratio of 100:4:1.4:8 (the weight ratio is identical to that in Example 1), and has thickness of 0.116-0.120mm; the negative electrode has size of 493mm x 44mm, graphite weight of 2.9g, and Li₄Ti₅O₁₂ weight of 0.04g.

### Comparison Example 2

This comparison Example is used to describe available secondary lithium ion battery.

A lithium ion battery is prepared according to the method in Example 1, and the differences are characterized by thickness of positive electrode, LiCoO₂ weight, and negative electrode preparation.

The positive electrode has coat thickness of 0.107-0.111mm and LiCoO₂ weight of 4.80g.

Preparation of negative electrode comprises forming a coat consisted of a mixture of Li₄Ti₅O₁₂, conductive carbon black, and SBR at weight ratio of 100:4:8 on negative electrode ; wherein the coat has a thickness of 0.138-0.142mm, and the negative electrode has size of 493mm x 44mm, and Li₄Ti₅O₁₂ weight of 4.74g.

### Battery Performance Test

### 1. Battery capacity and Medium voltage test

At room temperature, the batteries prepared by Examples 1-6 and Comparison Example 1 are respectively charged to 4.2V at current of 1C, then charged at constant voltage of 4.2V and cut off at current of 0.05C, allowed to stand for 5min, then discharged to 2.75V at current of 1C to obtain capacity of the battery discharged to 2.75V at current of 1C and room temperature; and the discharge medium voltage is recorded.

At room temperature, the battery prepared by Comparison Example 2 is charged to 3.0V at current of 1C, charged at constant voltage of 3.0V and cut off at current of 0.05C, allowed to stand for 5min, then discharged to 1.8V at current of 1C to obtain capacity of the battery discharged to 1.8V at current of 1C and room temperature; and the discharge medium voltage is recorded.

The measured capacity and medium voltage for each battery are shown in Table 1.

**Table 1**

| | medium voltage (V) | Battery capacity (mAh) |
|---|---|---|
| Example 1 | 3.64 | 980 |
| Example 2 | 3.63 | 976 |
| Example 3 | 3.62 | 979 |
| Example 4 | 3.63 | 975 |
| Example 5 | 3.62 | 972 |
| Example 6 | 3.61 | 974 |
| Comparison Example 1 | 3.65 | 978 |
| Comparison Example 2 | 2.35 | 748 |

It can be seen from Table 1 that: the batteries using the negative electrodes prepared by Examples 1-6 have high medium voltage and capacity; the battery using the negative electrode prepared by Comparison Example 1 also has high medium voltage and capacity; but the battery using the negative electrode prepared by Comparison Example2 has low medium voltage and capacity.

### 2. High rate performance test

### A. High rate discharge test

At room temperature, the batteries prepared by Examples 1-6 and Comparison Example 1 are respectively charged to 4.2V at current of 1C, then charged at constant voltage of 4.2V and cut off at current of 0.05C, allowed to stand for 5min, and discharged to 2.75V at current of 0.2C to obtain capacity of the battery discharged to 2.75V at current of 0.2C and room temperature; the aforementioned charging procedures are repeated, the batteries are respectively discharged at current of 3C to obtain capacities of the batteries discharged to 2.75V at current of 3C and room temperature, and the discharge medium voltage is recorded; the aforementioned charging procedures are repeated, the batteries are respectively discharged at current of 5C to obtain capacities of the batteries discharged to 2.75V at current of 5C and room temperature, and the discharge medium voltage is recorded; the ratios of the capacities of the battery discharged at current of 3C and 5C to that of the battery discharged at current of 0.2C are respectively calculated (abbreviated as discharge ratio of 3C/0.2C and 5C/0.2C below).

At room temperature, the battery prepared by Comparison Example 2 is charged to 3.0V at current of 1C, charged at constant voltage of 3.0V and cut off at current of 0.05C, allowed to stand for 5min, and discharged to 1.8V at current of 0.2C to obtain capacity of the battery discharged to 1.8V at current of 0.2C and room temperature; the aforementioned charging procedures are repeated, the battery is discharged at current of 3C to obtain capacity of the battery discharged to 1.8V at current of 3C and room temperature, and the discharge medium voltage is recorded; the aforementioned charging procedures are repeated, the battery is discharged at current of 5C to obtain capacity of the battery discharged to 1.8V at current of 5C and room temperature, and the discharge medium voltage is recorded; the ratios of the capacities of the battery discharged at current of 3C and 5C to that of the battery discharged at current of 0.2C are respectively calculated (abbreviated as discharge ratio of 3C/0.2C and 5C/0.2C below).

The obtained discharge ratios of 3C/0.2C and 5C/0.2C, and discharge medium voltage are shown in Table 2.

**Table 2**

| | 3C | | 5C | |
|---|---|---|---|---|
| | Discharge ratio of 3C/0.2C (%) | medium voltage (V) | Discharge ratio of 5C/0.2C (%) | medium voltage (V) |
| Example 1 | 92.4% | 3.55 | 86.4% | 3.52 |
| Example 2 | 89.2% | 3.54 | 85.6% | 3.48 |
| Example 3 | 91.5% | 3.56 | 84.5 % | 3.46 |
| Example 4 | 91.8% | 3.56 | 84.9% | 3.51 |
| Example 5 | 88.5% | 3.53 | 84.2% | 3.47 |
| Example 6 | 88.0% | 3.53 | 83.9% | 3.46 |
| Comparison Example 1 | 81.4% | 3.48 | 72.7% | 3.40 |
| Comparison Example 2 | 91.4% | 2.31 | 86.1% | 2.28 |

It can be seen from Table 2 that: the batteries using the negative electrodes prepared by Examples 1-6 have ratio of discharge capacity under high rate to that under current of 0.2C equivalent to or slightly lower than that of Comparison Example 2; but the battery using the negative electrode prepared by Comparison Example 1 has ratio of discharge capacity under high rate to that under current of 0.2C significantly lower than that of Comparison Example 2.

### B. High rate charge test

At room temperature, the batteries prepared by Examples 1-6 and Comparison Example 1 are respectively charged to 4.2V at current of 0.2C, charged at constant voltage of 4.2V and cut off at current of 0.05C, allowed to stand for 5min, and discharged at current of 1C to 2.75V to obtain capacity of the battery charged to 4.2V at current of 0.2C and then discharged to 2.75V at current of 1C and room temperature; then the batteries are respectively charged to 4.2V at current of 3C, charged at constant voltage of 4.2V and cut off at current of 0.05C, allowed to stand for 5min, and discharged to 2.75V at current of 1C to obtain capacity of the battery charged to 4.2V at current of 3C and then discharged to 2.75V at current of 1C and room temperature; and the batteries are respectively charged to 4.2V at current of 5C, charged at constant voltage of 4.2V and cut off at current of 0.05C, allowed to stand for 5min, and discharged at current of 1C to 2.75V to obtain capacity of the battery charged to 4.2V at current of 5C and then discharged to 2.75V at current of 1C and room temperature. The ratios of the discharge capacities of the battery charged at current of 3C and 5C to that of the battery charged at current of 0.2C are respectively calculated.

At room temperature, the battery prepared by Comparison Example 2 is charged to 3.0V at current of 0.2C, charged at constant voltage of 3.0V and cut off at current of 0.05C, allowed to stand for 5min, and discharged at current of 1C to 1.8V to obtain capacity of the battery charged to 3.0V at current of 0.2C and then discharged to 1.8V at current of 1C and room temperature; then the battery is charged to 3.0V at current of 3C, charged at constant voltage of 3.0V and cut off at current of 0.05C, allowed to stand for 5min, and discharged at current of 1C to 1.8V to obtain capacity of the battery charged to 3.0V at current of 3C and then discharged to 1.8V at current of 1C and room temperature; and the battery is charged to 3.0V at current of 5C, charged at constant voltage of 3.0V and cut off at current of 0.05C, allowed to stand for 5min, and discharged at current of 1C to 1.8V to obtain capacity of the battery charged to 3.0V at current of 5C and then discharged to 1.8V at current of 1C and room temperature. The ratios of the discharge capacities of the battery charged at current of 3C and 5C to that of the battery charged at current of 0.2C are respectively calculated (abbreviated as discharge ratio of 3C/0.2C and 5C/0.2C below).

The obtained discharge ratios of 3C/0.2C and 5C/0.2C are shown in Table 3.

**Table 3**

| | Discharge ratio of 3C/0.2C (%) | Discharge ratio of 5C/0.2C (%) |
|---|---|---|
| Example 1 | 94.3% | 87.6% |
| Example 2 | 91.7% | 85.8% |
| Example 3 | 93.2% | 86.7% |
| Example 4 | 92.9% | 86.0% |
| Example 5 | 91.8% | 85.0% |
| Example 6 | 91.4% | 84.2% |
| Comparison Example 1 | 85.7% | 76.5% |
| Comparison Example 2 | 94.2% | 87.9% |

It can be seen from the Table 3 that: the batteries using the negative electrodes prepared by Examples 1-6 have ratios of discharge capacity under high rate to that under current of 0.2C equivalent to or slightly lower than that of Comparison Example 2; but the battery using the negative electrode prepared by Comparison Example 1 has ratio of discharge capacity under high rate to that under current of 0.2C significantly lower than that of Comparison Example 1.

### 3. Safety performance test

### A. Oven temperature test

At room temperature, the batteries prepared by Examples 1-6 and Comparison Example 1 are respectively charged to 4.2V at current of 1C, and the battery prepared by Comparison Example 2 is charged to 3.0V at current of 1C; then the batteries are respective charged at constant voltage of 4.2V and 3.0V and cutoff current of 0.05C, allowed to stand for 5 min, and disposed in 150°C oven; after 1.5 hr, the batteries are observed for abnormal appearance, and tested for maximum temperature of battery surface; the observation and measurement results are shown in Table 4.

**Table 4**

| | Battery Appearance | Maximum temperature of battery surface (°C) |
|---|---|---|
| Example 1 | bulged | 151.4 |
| Example 2 | bulged | 151.8 |
| Example 3 | bulged | 152.4 |
| Example 4 | bulged | 151.7 |
| Example 5 | bulged | 152.2 |
| Example 6 | bulged | 151.3 |
| Comparison Example 1 | bulged, electrolyte leakage | 155.4 |
| Comparison Example 2 | bulged | 152.1 |

It can be seen from the Table 4 that: the batteries using the negative electrodes prepared by Examples 1-6 have safety performance equivalent to or higher than that of Comparison Example 2; and the battery using the negative electrode prepared by Comparison Example 1 has poor safety performance.

### B. Electrode surface lithium concentration test

At room temperature, the batteries prepared by Examples 1-6 and Comparison Example 1 are respectively charged to 4.2V at current of 5C, and the battery prepared by Comparison Example 2 is charged to 3.0V at current of 5C; then the batteries are respective charged at constant voltage of 4.2V and 3.0V and cut off at current of 0.05C, allowed to stand for 5min, and disassembled under inert gas atmosphere to take out negative electrode; the negative electrode is observed by naked eyes, and immediately subjected to XPS test to measure lithium concentration on the negative electrode surface; the observation result and lithium concentration on the negative electrode surface are shown in Table 5.

**Table 5**

| | Negative electrode appearance | Negative electrode surface lithium concentration (wt%) |
|---|---|---|
| Example 1 | Normal | 14.5 |
| Example 2 | Normal | 15.8 |
| Example 3 | Normal | 16.3 |
| Example 4 | Normal | 20.5 |
| Example 5 | Normal | 18.1 |
| Example 6 | Normal | 22.4 |
| Comparison Example 1 | Many White spots | 45.2 |
| Comparison Example 2 | Normal | 13.7 |

It can be seen from the Table 5 that: the batteries using the negative electrodes prepared by Examples 1-6 and Comparison Example 2 have low lithium concentration on negative electrode surface, and good safety performance; and the battery using the negative electrode prepared by Comparison Example 1 has high lithium concentration on negative electrode surface, and poor safety performance.

### C. Short circuit test

At room temperature, the batteries prepared by Examples 1-6 and Comparison Example 1 are respectively charged to 4.2V at current of 5C, and the battery prepared by Comparison Example 2 is charged to 3.0V at current of 5C; then the batteries are respective charged at constant voltage of 4.2V and 3.0V and cut off at current of 0.05C, allowed to stand for 5min, then attached with thermometer thermal couple probe on surface thereof, and placed on short circuit device with negative electrode and positive electrode in short circuit state; battery appearance and maximum temperature on the battery surface are observed and recorded, and the results are shown in Table 6.

**Table 6**

| | Battery appearance | Battery surface maximum temperature (°C) |
|---|---|---|
| Example 1 | bulged | 112.4 |
| Example 2 | bulged | 114.5 |
| Example 3 | bulged | 115.2 |
| Example 4 | bulged | 114.9 |
| Example 5 | bulged | 115.7 |
| Example 6 | bulged | 116.3 |
| Comparison Example 1 | bulged, electrolyte leakage | 182.3 |
| Comparison Example 2 | bulged | 113.1 |

It can be learned from the Table 6 that: the batteries using the negative electrodes prepared by Examples 1-6 and Comparison Example 2 have good safety performance; and the battery using the negative electrode prepared by Comparison Example 1 has poor safety performance.

### 4. Negative electrode capacity test

The negative electrode prepared by Examples 1-6 and Comparison Example 1 are tailored into round plates with diameter of 14mm; mixture with composition and content identical to those of negative electrode material in Comparison Example 2 is adopted to form negative electrode coat with thickness of 0.116-0.120mm, then is tailored into round plate with diameter of 14mm. Button cells are prepared by using the obtained round plates as positive electrode, and metal lithium plates as negative electrode. The obtained cells are discharged to 0.005V at current of 0.2mA, allowed to stand for 5min, and charged to 2.5V at current of 0.2mA, charged at constant voltage of 2.5V and cut off at current of 0.01mA; the capacity for each button cell is recorded, and is used for representing each negative electrode capacity. The test results are shown in Table 7.

**Table 7**

| | Negative electrode Capacity (mAh) |
|---|---|
| Example 1 | 1.96 |
| Example 2 | 1.82 |
| Example 3 | 2.07 |
| Example 4 | 1.91 |
| Example 5 | 1.89 |
| Example 6 | 1.85 |
| Comparison Example 1 | 1.93 |
| Comparison Example 2 | 1.25 |

It can be seen from Table 7 that: the negative electrodes provided by Examples 1-6 and Comparison Example 1 have high capacity, while the negative electrode provided by Comparison Example 2 has low capacity.

The performance test result shows that the lithium ion battery prepared by using LiCoO₂ positive electrode and the negative electrode provided by the present invention has capacity higher than 970mAh, voltage higher than 3.6V; while the available lithium ion battery (Comparison Example 2) with good cycle performance, high-rate discharge-charge performance, and safety performance has capacity of 748 mAh and voltage less than 3.2V. By testing negative electrode capacity by assembling corresponding negative electrode into button cell, it has been found that the negative electrode provided by the present invention has capacity higher than 1.8mAh, while the available negative electrode has capacity of 1.25mAh. The battery (Comparison Example 1) using the negative electrode prepared by coating one layer of material with composition and content identical to those of the inventive negative electrode material is poor in cycle performance, high-rate discharge-charge performance, and safety performance. Therefore, the lithium ion battery using the negative electrode provided by the present invention is excellent in cycle performance, high-rate discharge-charge performance, and safety performance, and has high capacity and voltage.

## Claims

1. A negative electrode for battery, comprising a current collector and a negative electrode material coat on the current collector, in which the said negative electrode material comprises carbonaceous material, binder, and lithium titanium oxide compound, wherein in the negative electrode material coat, the carbonaceous material has total weight percentage content higher than that of the lithium titanium oxide compound; and the negative electrode material coat comprises at least two layers; in the outermost layer of the negative electrode material coat, the carbonaceous material has weight percentage content lower than that of the lithium titanium oxide compound; in other layers of the negative electrode material coat, the carbonaceous material has weight percentage content higher than that of the lithium titanium oxide compound.

2. The negative electrode according to claim 1, wherein the ratio of the total weight percentage content of the carbonaceous material to that of lithium titanium oxide compound is (1.5-100):1; in the outermost layer of the negative electrode material coat , the ratio of weight percentage content of the carbonaceous material to that of lithium titanium oxide compound is (0-0.25):1; and in other layers of the negative electrode material coat, the ratio of weight percentage content of lithium titanium oxide compound to that of the carbonaceous material is (0-0.25):1.

3. The negative electrode according to claim 2, wherein the negative electrode material coat comprises a layer directly contacting with current collector surface and an outer layer; the layer directly contacting with current collector surface comprises 80-95wt% of carbonaceous material, 1-10 wt% of binder, 0-8wt% of conductive agent, and 0-16wt% of lithium titanium oxide compound, based on total weight of the layer directly contacting with current collector surface; the outer layer comprises 80-95wt% of lithium titanium oxide compound, 0-16wt% of carbonaceous material, 0-8wt% of conductive agent, and 1-10wt% of binder, based on total weight of the outer layer.

4. The negative electrode according to claim 3, wherein the thickness ratio of the layer directly contacting with the current collector surface to the outer layer is 50: (25-2).

5. The negative electrode according to claim 4, wherein the layer directly contacting with the current collector surface has thickness of 0.070-0.120mm, and the outer layer has thickness of 0.003-0.040mm.

6. The negative electrode according to claim 3, wherein the conductive agent is nickel powder and/or copper powder.

7. The negative electrode according to claim 1 or 3, wherein the carbonaceous material can be one or more selected from the group consisted of graphite, carbon black, coke, activated carbon, carbon fiber, petroleum coke, hard carbon, and carbon nanotubes; the lithium titanium oxide compound is lithium titanium oxide compound material with chemical formula of Li₃₊₃ₓTi_{6-3-y}MyO₁₂, wherein x and y are molar fraction, 0≤x≤1/3, 0≤y≤0.25, and M is one or more selected from the group consisted of Fe, Al, Ca, Co, B, Cr, Ni, Mg, Zr, Ga, V, Mn and Zn; and the binder is one or more selected from the group consisted of polyvinylidene fluoride, polytetrafluoroethylene, sodium carboxymethylcellulose, and styrene-butadiene rubber.

8. A lithium ion battery comprising a case, a positive electrode a negative electrode, a separator and electrolyte, and the positive electrode, negative electrode, separator and electrolyte are sealed in the battery case, wherein the negative electrode is the negative electrode according to any one of claims 1-7.

## Patentansprüche

1. Negative Elektrode für eine Batterie, die einen Stromkollektor und eine negative Elektrodenmaterial-Ummantelung auf dem Stromkollektor umfasst, worin das negative Elektrodenmaterial Kohlenstoff-Material, Bindemittel und eine Lithiumtitanoxidverbindung umfasst, worin in der negativen Elektrodenmaterial-Ummantelung das Kohlenstoffmaterial einen gesamten Gew.%-Gehalt hat, der höher als der der Lithiumtitanoxidverbindung ist; und die negative Elektrodenmaterial-Ummantelung mindestens zwei Schichten umfasst; in der äußersten Schicht der negativen Elektrodenmaterial-Ummantelung das Kohlenstoffmaterial einen Gew.%-Gehalt hat, der niedriger als der der Lithiumtitanoxidverbindung ist; in den anderen Schichten der negativen Elektrodenmaterial-Ummantelung das Kohlenstoffmaterial einen Gew.%-Gehalt hat, der höher ist als der der Lithiumtitanoxidverbindung.

2. Negative Elektrode gemäß Anspruch 1, worin das Verhältnis des gesamten Gew.%-Gehalts des Kohlenstoffmaterials zu dem der Lithiumtitanoxidverbindung (1,5 bis 100):1 ist; in der äußersten Schicht der negativen Elektrodenmaterial-Ummantelung das Verhältnis des Gew.%-Gehalts des Kohlenstoffmaterials zu dem der Lithiumtitanoxidverbindung (0 bis 0,25):1 ist; und in anderen Schichten der negativen Elektrodenmaterial-Ummantelung das Verhältnis des Gew.%-Gehalts der Lithiumtitanoxidverbindung zu dem des Kohlenstoffmaterials (0 bis 0,25):1 ist.

3. Negative Elektrode gemäß Anspruch 2, worin die negative Elektrodenmaterial-Ummantelung eine Schicht, die in direktem Kontakt zur Stromkollektor-Oberfläche steht, und eine äußere Schicht umfasst; die Schicht, die in direktem Kontakt zur Stromkollektor-Oberfläche steht, 80 bis 95 Gew.% von Kohlenstoffmaterial, 1 bis 10 Gew.% Binder, 0 bis 8 Gew.% leitfähiges Mittel und 0 bis 16 Gew.% Lithiumtitanoxidverbindung auf Basis des gesamten Gewichts der Schicht, die in direktem Kontakt zur Stromkollektor-Oberfläche steht, umfasst; die äußere Schicht 80 bis 95 Gew.% Lithiumtitanoxidverbindung, 0 bis 16 Gew.% Kohlenstoffmaterial, 0 bis 8 Gew.% leitfähiges Mittel und 1 bis 10 Gew.% Binder auf Basis des gesamten Gewichts der äußeren Schicht umfasst.

4. Negative Elektrode gemäß Anspruch 3, worin das Dickeverhältnis der Schicht, die in direktem Kontakt zur Stromkollektor-Oberfläche steht, zur äußeren Schicht 50:25 bis 2) ist.

5. Negative Elektrode gemäß Anspruch 4, worin die Schicht, die in direktem Kontakt mit der Stromkollektor-Oberfläche steht, eine Dicke von 0,070 bis 0,120 mm hat und die äußere Schicht eine Dicke von 0,003 bis 0,040 mm hat.

6. Negative Elektrode gemäß Anspruch 3, worin das leitfähige Mittel Nickelpulver und/oder Kupferpulver ist.

7. Negative Elektrode gemäß Anspruch 1 oder 3, worin das Kohlenstoffmaterial eines oder mehrere ausgewählt aus der Gruppe bestehend aus Graphit, Ruß, Koks, Aktivkohle, Kohlefaser, Petrolkoks, Hartkohlenstoff und Kohlenstoffnanoröhren, sein kann; die Lithiumtitanoxidverbindung ein Lithiumtitanoxid-Verbindungsmaterial mit der chemischen Formel Li₃₊₃ₓTi_{6-3x-y}M_{y}O₁₂ ist, worin x und y Molenbrüche sind, 0≤x≤1/3, 0≤y≤0,25, und M eines oder mehrere ausgewählt aus der Gruppe bestehend aus Fe, Al Ca, Co, B, Cr, Ni, Mg, Zr, Ga, V, Mn und Zn ist; und der Binder eines oder mehrere ausgewählt aus der Gruppe bestehend aus Polyvinylidenfluorid, Polytetrafluoroethylen, Natriumcarboxymethylcellulose und Styrol-Butadien-Kautschuk ist.

8. Lithiumionenbatterie, die ein Gehäuse, eine positive Elektrode, eine negative Elektrode, einen Separator und einen Elektrolyten umfasst, wobei die positive Elektrode, die negative Elektrode, der Separator und der Elektrolyt im Batteriegehäuse versiegelt sind, worin die negative Elektrode die negative Elektrode gemäß mindestens einem der Ansprüche 1 bis 7 ist.

## Revendications

1. Electrode négative pour pile, comprenant un collecteur de courant et un revêtement de matériau d'électrode négative sur le collecteur de courant, dans lequel ledit matériau d'électrode négative comprend un matériau carboné, un liant, et un composé d'oxyde de titane lithium, dans lequel dans le revêtement de matériau d'électrode négative, le matériau carboné a un pourcentage massique total supérieur à celui du composé d'oxyde de titane lithium ; et le revêtement de matériau d'électrode négative comprend au moins deux couches ; dans la couche la plus externe du revêtement de matériau d'électrode négative, le matériau carboné a un pourcentage massique inférieur à celui du composé d'oxyde de titane lithium ; dans les autres couches du revêtement de matériau d'électrode négative, le matériau carboné a un pourcentage massique supérieur à celui du composé d'oxyde de titane lithium.

2. Electrode négative selon la revendication 1, dans lequel le rapport du pourcentage en poids total du matériau carboné sur celui du composé d'oxyde de titane lithium est (1,5-100):1 ; dans la couche la plus externe du revêtement de matériau d'électrode négative, le ratio de pourcentage massique du matériau carboné sur celui du composé d'oxyde de titane lithium est (0-0,25):1 ; et dans les autres couches du revêtement de matériau d'électrode négative, le rapport de pourcentage massique de composé d'oxyde de titane lithium sur celui du matériau carboné est (0-0,25):1.

3. Electrode négative selon la revendication 2, dans lequel le revêtement de matériau d'électrode négative comprend une couche directement en contact avec une surface de collecteur de courant et une couche externe ; la couche en contact directement avec la surface de collecteur de courant comprend 80 à 95 % en poids de matériau carboné, 1 à 10 % en poids de liant, 0 à 8 % en poids d'agent conducteur, et 0 à 16 % en poids de composé d'oxyde de titane lithium, sur la base du poids total de la couche en contact directement avec la surface de collecteur de courant ; la couche externe comprend 80 à 95 % en poids de composé d'oxyde de titane lithium, 0 à 16 % en poids de matériau carboné, 0 à 8 % en poids d'agent conducteur, et 1 à 10 % en poids de liant, sur la base du poids total de la couche externe.

4. Electrode négative selon la revendication 3, dans lequel le rapport d'épaisseur de la couche en contact directement avec la surface de collecteur de courant sur la couche externe est 50:(25-2).

5. Electrode négative selon la revendication 4, dans lequel la couche en contact directement avec la surface de collecteur de courant a une épaisseur de 0,070 à 0,120 mm, et la couche externe a une épaisseur de 0,003 à 0,040 mm.

6. Electrode négative selon la revendication 3, dans lequel l'agent conducteur est une poudre de nickel et/ou une poudre de cuivre.

7. Electrode négative selon la revendication 1 ou 3, dans lequel le matériau carboné peut être un ou plusieurs sélectionnés à partir du groupe se composant de graphite, de noir de carbone, de coke, de carbone activé, de fibre de carbone, de coke de pétrole, de carbone dur, et de nanotubes de carbone ; le composé d'oxyde de titane lithium est un matériau de composé d'oxyde de titane lithium avec une formule chimique de Lᵢ₃₊₃ₓT_{i6-3x-y}M_{y}O₁₂, où x et y sont une fraction molaire 0≤x≤1/3, 0≤y≤0,25, et M est un ou plusieurs sélectionnés à partir du groupe composé de Fe, Al, Ca, Co, B, Cr, Ni, Mg, Zr, Ga, V, Mn et Zn ; et le liant est un ou plusieurs sélectionnés à partir du groupe composé de fluorure de polyvinylidène, de polytétrafluoroéthylène, de carboxyméthylcellulose de sodium, et de caoutchouc de styrène-butadiène.

8. Pile à ion au lithium comprenant un boîtier, une électrode positive, une électrode négative, un séparateur et un électrolyte, et l'électrode positive, l'électrode négative, le séparateur et l'électrolyte sont scellés dans le boîtier de pile, dans lequel l'électrode négative est l'électrode négative selon l'une quelconque des revendications 1 à 7.
